# EUROPEAN PATENT SPECIFICATION

(11) **EP 4 202 524 B1**
(45) Date of publication and mention of the grant of the patent: **09.12.2026**
(21) Application number: 21216401.6
(22) Date of filing: 21.12.2021
(51) Int. Cl.: G02B 21/24, G02B 21/36, G06F 3/04847

(54) **MICROSCOPE CONTROL ARRANGEMENT**
MIKROSKOPSTEUERUNGSANORDNUNG
AGENCEMENT DE COMMANDE DE MICROSCOPE

(43) Date of publication of application: 28.06.2023
(73) Proprietor: Leica Microsystems CMS GmbH, 35578 Wetzlar (DE)
(72) Inventor: Schechter, Markus, 60438 Frankfurt (DE); Dias, Gabriel-Roberto, 35584 Wetzlar-Naunheim (DE)
(74) Representative: Schaumburg und Partner Patentanwälte mbB

(56) References cited:
- EP-A1- 2 339 389
- EP-A2- 1 598 688
- WO-A1-2018/195221
- US-A1- 2010 030 348
- US-A1- 2018 196 248
- US-A1- 2019 139 128
- US-A1- 2020 098 343
- CARTER, S. ET AL: "Dynamically Adapting GUIs to Diverse Input Devices", ACM, 2 PENN PLAZA, SUITE 701 - NEW YORK USA, 25 October 2006 (2006-10-25), XP040049348
- ANONYMOUS: "Zen 2 -Software Guide", 31 October 2014 (2014-10-31), pages 1 - 309, XP055802092, Retrieved from the Internet <URL:https://www.unige.ch/medecine/bioimaging/files/3914/3765/2064/ZEN_2_blue_edition_-_Software_Guide.pdf> [retrieved on 20210506]
- "In-Depth Solutions with Graphical System Design in Eastern Europe Table of Contents Using CompactRIO and LabVIEW to Monitor Switchgear Conditions Reconfigurable HIL Simulator for Vehicle-Dynamics-Based ECU Development and Testing with NI VeriStand and NI TestStand", 30 May 2012 (2012-05-30), XP055119183, Retrieved from the Internet <URL:ftp://ftp.ni.com/pub/branches/ee/2012/nidays/nidays_2012_case_study_booklet.pdf> [retrieved on 20140521]

## Description

### Technical field

The present invention relates to a microscope control arrangement for operating a microscope focusing device which is adapted to adjust the relative focus position of an objective in relation to a sample. Furthermore, the present invention relates to a method for operating a microscope focusing device and a computer program with a program code.

### Background

When operating a microscope, a user is faced with the challenge of bringing a sample into focus by adjusting a position of a microscope objective along the optical axis relative to the sample, such position also commonly referred to as z-position. A relative focus position may be varied by means of a microscope focusing device which is configured to move the objective along the optical axis relative to the sample or vice versa.

Recently, graphical user interfaces (GUIs) have been proposed which make it easier for the user to perform focusing. However, conventional GUIs typically do not provide guidance and orientation to the user in navigating along the optical axis when adjusting the focus position of the objective in relation to the sample. In particular, if the sample is out of focus, the user usually does not know in which direction along the optical axis the user is moving the objective relative to the sample when operating a mouse wheel or any other type of z-control element commonly used in microscope systems. Furthermore, there is also no indication about a useful focus range or about an area in which the sample is located along the optical axis. In other words, the user currently has to navigate the objective more or less blindly along the optical axis. As a result, there is a risk that the objective will collide with the sample during z-movement and cause scratches in the objective and/or damage the sample.

Another challenge is to define so-called z-stacks, i.e. stacks of images captured one after the other along the optical axis to acquire three dimensional image data sets. Conventionally, the user has to manually define upper and lower z-stack limits using quite complex z-interfaces. Typically, the user does not get any feedback about how large the z-stack is in relation to the useful focus range.

Reference is made to the documents EP 1 598 688 A2, EP 2 339 389 A1, US 2018/196248 A1, and Anonymous: "Zen 2 - Software Guide", 31 October 2014, pages 1-309, XP055802092. Each of the documents disclose a user interface for a microscope comprising a slider for adjusting a focus position. Further reference is made to WO 2018/195221 A1 and US 2010/030348 A1.

### Summary

It is an object to provide a microscope control arrangement, a method, and a computer program for operating a microscope focusing device that enable a user to perform focusing easily and safely.

The afore-mentioned object is achieved by the subject-matter according to the independent claims. Advantageous embodiments are defined in the dependent claims and the following description.

A microscope control arrangement (microscope control device) is provided for operating a microscope focusing device that is adapted to adjust a focus position of an objective in relation to a sample along an optical axis of the objective. The microscope control arrangement comprises a display device configured to display a graphical user interface (GUI) which is adapted to receive a user input. The microscope control arrangement further comprises at least one processor configured to control the microscope focusing device and the display device for updating the GUI in response to the user input. The process is configured to cause the GUI to display a focus control interface which comprises a graphical focus range element indicating a predetermined focus range and a graphical z-position pointer indicating a current z-position within the predetermined focus range. The graphical z-position pointer is movable along the graphical focus range element in response to the user input to adjust the relative focus position.

Since the GUI displays a graphical focus range element, the user is enabled to monitor whether or not the objective is still within a useful focus range. Thus, the user can easily navigate through the focus range by moving the graphical z-position pointer along the graphical focus range element. In particular, the user can reliably avoid that the objective collides with the sample during its movement along the optical axis. Thus, a limit of the focus range can be set to be close to the surface of the sample without any risk of collision.

Preferably, the microscope control arrangement comprises an input device configured to receive the user input for controlling the GUI. For example, the input device may comprise a computer pointing device. In addition or alternatively, the input device may be integrated with a touch-sensitive screen.

The graphical focus range element may comprise a bar along which the graphical z-position point is movable by the user input. Such a graphical bar allows the user to navigate easily through the available focus range.

The processor is configured to obtain first and second limiting values for setting the relative focus position. Furthermore, the processor is configured to cause the GUI to display the graphical focus range element between first and second graphical focus range limits assigned to the first and second limiting values, respectively. One of the focus range limits is determined by means of a focus control device which is integrated in the microscope. The other focus range limit is defined depending on a free working distance (FWD) of the objective, taking into account a thickness of a coverslip, if any, in order to reliably avoid any collision of the objective with a coverslip.

According to a preferred embodiment, the processor is configured to cause the focus control interface to display at least one graphical arrow icon indicating a moving direction in which the graphical z-position pointer is moved along the graphical focus range element by the user input. Such a graphical arrow icon indicates the moving direction of the objective relative to the focus range limits. This makes it easier for the user to navigate through focus range.

Preferably, the processor is configured to cause the focus control interface to display at least one graphical out-of-range alert element indicating that the relative focus position adjusted by the user input exceeds the predetermined focus range. By using such an alert element, the user can be reliably warned of a possible collision of the objective with the sample.

In order to further increase collision protection, the graphical out-of-range alert element may be configured to indicate an amount by which the relative focus position adjusted by the user input exceeds the predetermined focus range.

The graphical user interface may comprise a live image on/off button configured to be operated by the user input to turn a live image display on or off. The graphical z-position pointer may comprise a live image display icon configured to indicate whether the live image display is turned on or off.

According to a preferred embodiment, the focus control interface includes an image stack interface comprising a graphical stack defining element and a graphical stack indication element. The graphical stack defining element is configured to be operated by user input to define a range of an image stack which is to be generated along the optical axis within the predetermined focus range displayed by the graphical focus range element. The graphical stack indication element is configured to indicate the range of the image stack defined by means of the graphical stack defining element. By means of the image stack interface, the user can easily predetermine a z-stack based on which a sequence of images is captured along the optical axis to acquire three dimensional image data sets. Since the z-stack is displayed by the GUI in relation to the available focus range, the user always knows where the z-stack is located relative to the focus range.

The graphical user interface may comprise a stack control on/off button configured to be operated by the user input to turn the display of the image stack interface on and off. Thus, the user can always display the image stack interface in form of a slim z-interface as an overlay to a viewer presented on the screen of the display device. However, the image stack interface can also be hidden by actuating the stack control on/off button, for example through a simple mouse click.

According to a preferred embodiment, the graphical stack indication element has a fixed size regardless of the size of the image stack. Thus, both the available focus range and the z-stack can be displayed in parallel, with the graphical representation of the z-stack having a fixed size relative to the graphical representation of the focus range, regardless of the actual size of z-stack. Accordingly, the user can always see where the current z-position is within the z-stack, regardless of how large or small the z-stack is.

Alternatively, the graphical stack indication element may also have a size which indicates the size of the image stack in relation to the size of the predetermined focus range.

Preferably, the graphical stack defining element is integrated with the graphical z-position pointer. Thus, it is easy for the user to define the z-stack limits by means of the z-position pointer.

The image stack interface may comprise a graphical z-position pointer indication element configured to indicate where the graphical z-position pointer is positioned along the graphical stack indication element.

Preferably, the graphical stack defining element is configured to be operated by user input to set a position for updating a limit of the image stack which is closer to said position. In this way, the image stack can be redefined easily.

The graphical stack defining element may additionally be configured to be operated by user input to define a position along the graphical stack indication element for re-centering the image stack at said position. Re-centering the image stack is an efficient operation for updating the stack without having to make cumbersome settings.

According to a preferred embodiment, the GUI comprises a graphical multi-function button configured to be operated by the user input to select an activation of one of the following functions assigned to the graphical stack defining element: the graphical defining element defines a first limit of the image stack in response to the user input; the graphical defining element defines a second limit of the image stack in response to the user input; and the graphical stack defining element re-centers the image stack relative to the current z-position in response to the user input.

According to another aspect, a method is provided for operating a microscope focusing device which is adapted to adjust a relative focus position of an objective in relation to a sample along an optical axis of the objective by means of the microscope control arrangement as described above. The method comprises the following steps: displaying a GUI which is adapted to receive a user input; and controlling the microscope focusing device and the display device for updating the GUI in response to the user input. The GUI is caused to display a focus control interface which comprises a graphical focus range element indicating a predetermined focus range and a graphical z-position pointer indicating a current z-position within the predetermined focus range. The graphical z-position pointer is moved along the graphical focus range element in response to the user input to adjust the relative focus position to the current z-position indicated by the graphical z-position pointer.

Further, a computer program with a program code is provided. The program code causes the microscope control arrangement to execute the method as described above.

### Short Description of the Figures

Hereinafter, specific embodiments are described referring to the drawings, wherein:
- Fig. 1: is a block diagram showing a microscope which comprises a microscope control arrangement for operating a microscope focusing device according to an embodiment;
- Fig. 2: is a diagram showing a graphical user interface according to an embodiment;
- Fig. 3: is a diagram illustrating how limits of an available focus range are determined;
- Fig. 4: is a diagram illustrating a graphical arrow icon of the GUI according to an embodiment;
- Fig. 5: is a diagram illustrating an out-of-range alert element of the GUI according to an embodiment;
- Fig. 6: is a diagram illustrating a stack control interface of the GUI according to an embodiment;
- Fig. 7: is a diagram illustrating a function of the GUI for moving a z-position pointer to a z-stack limit according to an embodiment;
- Fig. 8: is a diagram illustrating a function of the GUI for moving the z-position pointer to a center of the z-stack according to an embodiment;
- Fig. 9: is a diagram illustrating the stack control interface after moving the z-position pointer to the center of the z-stack according to an embodiment;
- Fig. 10: is a diagram illustrating a manual setting of the z-stack according to an embodiment;
- Fig. 11: is a diagram illustrating a function of the GUI for starting an autofocus (AF) operation according to an embodiment;
- Fig. 12: is a diagram illustrating a function of the GUI for automatically defining the z-stack according to an embodiment;
- Fig. 13: is a diagram illustrating the display of the image stack interface after automatically defining the z-stack according to an embodiment;
- Fig. 14: is a diagram illustrating a function of the GUI for updating a z-stack limit according to an embodiment; and
- Fig. 15: is a diagram illustrating the display of the image stack interface after updating the z-stack limit according to an embodiment; and
- Fig. 16: shows a schematic illustration of a system to perform the method according to Figure 15.

### Detailed Description

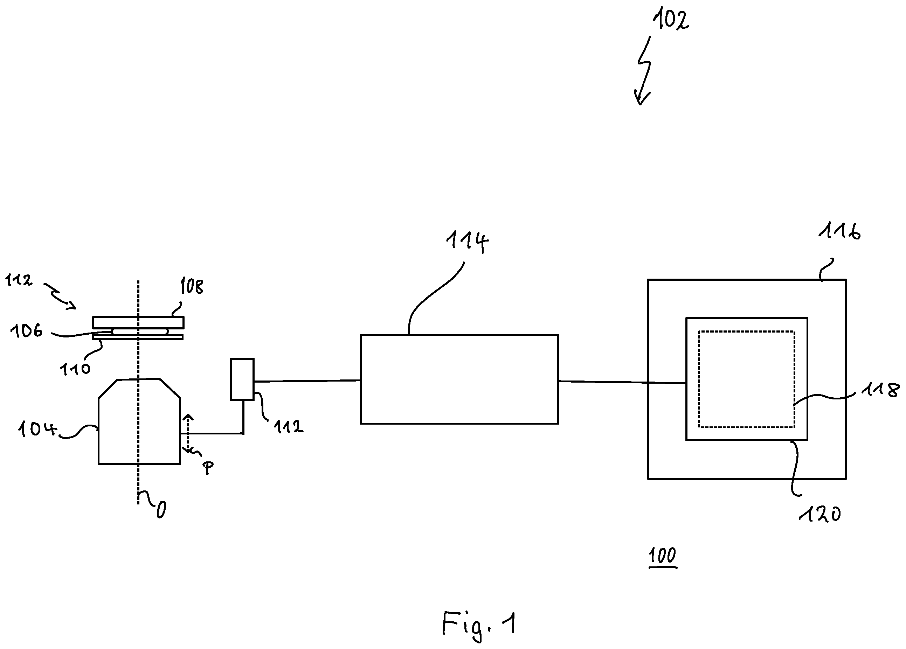

Figure 1 shows a microscope 100 according to an embodiment. Figure 1 is purely schematic and shows only those components of the microscope 100 which may be helpful to understand the operating principle. The microscope 100 shown here is an inverted microscope, but the described set-up can also be used for upright microscopes.

The microscope 100 comprises a microscope control arrangement 102 which can be operated by a user to adjust a relative focus position of an objective 104 in relation to a sample 106. In the embodiment shown in Figure 1, the sample 106 is arranged on a sample carrier 108. On a side opposite to the sample carrier 108, a coverslip 110 is provided which covers the sample 106. In the present embodiment, the sample carrier 108, the coverslip 110, and the sample 112 positioned therebetween form a microscopic specimen which as a whole is denoted by reference sign 113. However, such a configuration is only to be understood as an example. For instance, specimen configurations without a coverslip are also conceivable.

The microscope 100 comprises a microscope focusing device 112 such as a motordriven actuator which can be controlled to move the objective 104 along an optical axis O thereof relative to the sample 106 as illustrated by an arrow P in Figure 1. According to a common designation of coordinate axes in the present technical field, it is assumed that the optical axis O is parallel to a z-direction. Thus, a position along the optical axis O is referred to as z-position. According to the example shown in Figure 1, the relative focus position is adjusted by moving the objective 104 while the sample 106 remains stationary. However, it is also possible to move the specimen 113 including the sample 106 while the objective 104 remains stationary.

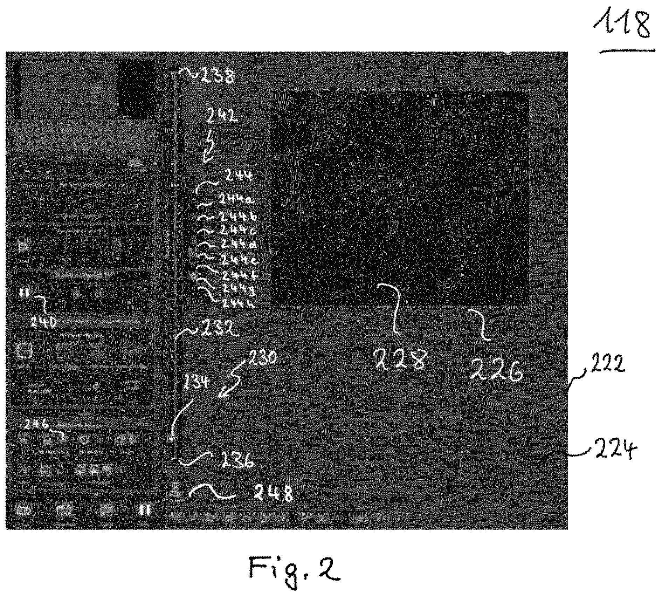

The microscope control arrangement 102 comprises at least one processor 114 which serves to operate the microscope focusing device 112 under the control of the user. To this end, a display device 116 is provided which is configured to display a graphical user interface (GUI) 118 that allows the user to interact with the microscope control arrangement 102 through graphical elements as explained below in more detail with reference to Figure 2 and 4 to 16.

The display device 116 may comprise a computer screen 120 displaying the GUI 118. Further, the microscope control arrangement 102 may include an input device which is configured to receive a user input based on which the GUI 118 is controlled for operating the microscope focusing device 112. For instance, the input device comprises a computer pointing device such as a computer mouse. In addition or alternatively, the screen 120 may be a touch-sensitive screen in which the input device is integrated. It is to be noted that such a configuration is only an example, and other hardware components may be provided allowing the user to interact with the GUI 118.

Figure 2 shows an example of the GUI 118 displayed on the screen 120. The GUI 118 allows the user to perform microscope operations by directly manipulating the graphical elements of the GUI 118. In particular, the GUI 118 is controlled by the processor 114 to receive an input from the user and to update its graphical elements in response to the user input.

The GUI 118 may include a variety of graphical control elements, and not all of these graphical control elements are closely related to the specific control of the microscope focusing device 112 relevant in the present context. Graphical control elements which are shown in Figure 2 and not specifically related to focus control are not described in detail hereinafter.

The GUI 118 may be included in a viewer having an image display area 222 in which a live image 224 of the sample 106 captured by the objective 104 can be displayed. According to the embodiment shown in Figure 2, the image display area 222 includes an ROI area 226 which displays an image 228 of an ROI of the sample 106 (ROI: region of interest). The GUI 118 comprises a live image on/off button 240 which is operated by the user to turn the image display area 222 on or off.

The processor 114 causes the graphical user interface 118 to display a focus control interface 230 that comprises a graphical focus range element 232 and a graphical z-position pointer 234. The graphical focus range element 232 indicates a predetermined focus range. It may be displayed in form of a bar. The focus range defines a range in which the objective 104 can be moved along the optical axis O (in z-direction) relative to the sample 106 by means of the microscope focusing device 112. The graphical z-position pointer 234 forms a graphical control element which is operated by the user to adjust a z-position of the objective 104 within the focus range. Thus, the graphical z-position pointer 234 can be shifted along the graphical focus range element 232 to change the focus position of the objective 104 relative to the sample 106. The location of the graphical z-position pointer 234 relative to the graphical focus range element 232 visualizes the current z-position of the objective 104 within the available focus range.

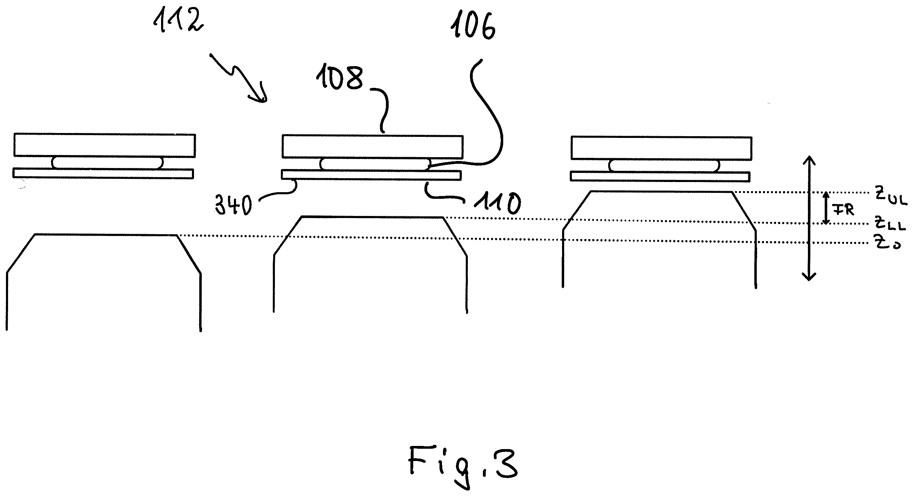

The processor 114 may obtain first and second limiting values for setting the relative focus position and cause the GUI 118 to display the graphical focus range element 232 between first and second graphical focus range limits 236, 238 which are assigned to the first and second limiting values, respectively. Figure 3 shows an example how of the first and second limiting values corresponding to the first and second graphical focus range limits 236, 238 displayed by the GUI 118 may be obtained.

Figure 3 illustrates, from the left to the right, a continuous displacement of the objective 104 along the optical axis O toward the coverslip 110 in order to determine the focus range limits 236, 238. Just as an example, the microscope 100 may be provided with a focus control device (not shown in the Figures) which is adapted to emit light through the objective 104 onto the coverslip 110. At a lower surface 340 of the coverslip 110 forming a partially reflecting interface between media with different refractive indices, a part of the emitted light is reflected back into the objective 104 and detected by a position-sensitive detector of the focus control device. Based on the detected light reflection, an axial distance from a front lens of the objective 104 to the coverslip 110 is determined, and the first limiting value is defined as z-value z_{LL}. Thus, the first (lower) graphical focus range limit 236 displayed in the focus control interface 230 is derived from of the z-value z_{LL}. Subsequently, taking into account a free working distance (FWD) of the objective 104, the second limiting value may be calculated as z-value z_{UL}, wherein a thickness of the coverslip 110 along the optical axis O may be considered in the calculation of z_{UL} in order to prevent the objective 104 from colliding with the coverslip 110 as the objective 104 moves toward the coverslip 110 when the relative focus position is varied. Thus, the second (upper) graphical focus range limit 238 displayed in the focus control interface 230 is derived from of the (objective-dependent) z-value z_{UL}. A difference between the z-positions z_{LL} and z_{UL} determines an axial focus range FR which corresponds to the graphical focus range element 232.

Referring again to Figure 2, the GUI 118 may display a graphical objective icon 248 below the lower focus range 236. The objective icon 248 indicates the objective 104 which is currently used in the microscope 100 for imaging the sample 106.

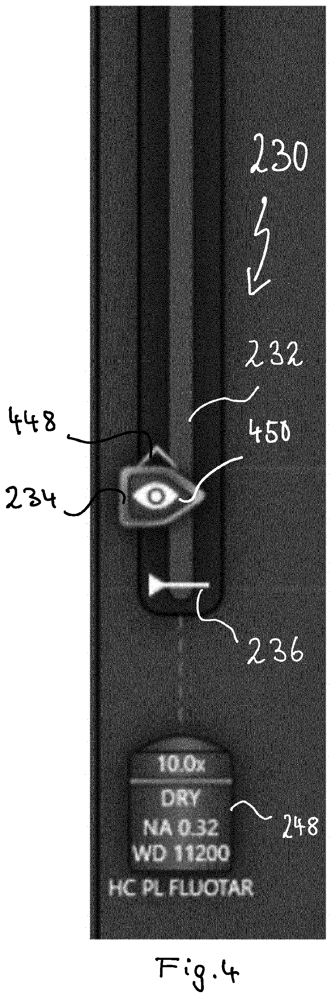

Figure 4 is a detailed view of a lower part of the graphical focus range element 232 including the first graphical focus range limits 236. According to the example shown in Figure 4, it is assumed that the user shifts the graphical z-position pointer 234 an upward direction along the graphical focus range element 232. In such a situation, the processor 114 causes the focus control interface 230 to display a graphical arrow icon 448 which indicates the upward moving direction of the graphical z-position pointer 234. A corresponding arrow icon is displayed when the user moves the graphical z-position pointer 234 in downward direction. Thus, the user knows at any time whether the objective 104 is moved toward the sample 106 or away from it.

As shown in Figure 4, the graphical z-position pointer 234 may comprise a live image display icon 450 which indicates whether the live image display is turned on or off. In the example of Figure 4, the live image display icon 450 shows an eye symbol. In case that the live image display is turned off, the eye symbol is crossed.

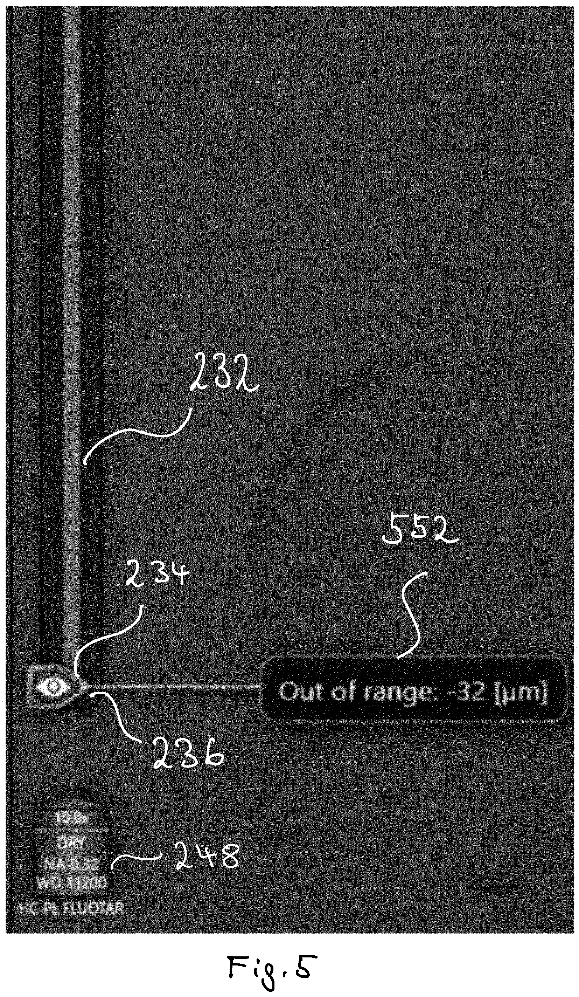

Figure 5 is another detailed view of the focus control interface 230 showing the lower part of the graphical focus range element 232. According to the example shown in Figure 5, the processor 114 causes the focus control interface 230 to display a graphical out-of-range alert element 552 as a user warning. Specifically, if the user operates the graphical z-position pointer 234 such that the pointer 234 would be shifted along the graphical focus range element 232 beyond the lower focus range limits 236, the graphical set pointer 234 is stopped at the focus range limit 236, and the out-of-range alert element 552 is displayed. Preferably, the out-of-range alert element 552 also indicates an amount by which the relative focus position adjusted by the user exceeds the predetermined focus range as shown in Figure 5. The out-of-range alert element 552 is displayed in the same manner if the graphical z-point position 234 is moved along the graphical focus range element 232 beyond the upper focus range limit 238.

As shown in Figure 2, the GUI 118 comprises an image stack interface 242 including a graphical toolbar 244 with several toolbar buttons 244a, 244b, 244c, 244d, 244e, 244f, 244g, and 244h. Displaying of the graphical toolbar 244 can be turned on and off by the user through a stack control on/off button 246.

The image stack interface 242 enables the user to prepare and perform a sequential acquisition of a plurality of images along the optical axis O. Specifically, the image stack interface 242 allows the user to determine an image stack, i.e. a z-stack along the optical axis O as a sequence of z-positions of the objective 104 relative to the sample 106 and to display the predetermined image stack based on which the images of the sample 106 are subsequently captured.

The image stack interface 230 may comprise a stack defining element in order to define a sub-range along the graphical focus range element 232 as a z-stack. In the present example, the aforementioned stack defining element is integrated with the graphical z-position pointer 234. In other words, in addition to moving the objective 104 along the optical axis O, the graphical z-position pointer 234 is also used to determine lower and upper limits of the aforementioned sub-range which defines the z-stack. To this end, the toolbar button 244b may be configured as a multi-function button which is operated by the user to select an activation of one specific function among a plurality of functions which are selectively assigned to the graphical z-position pointer 234. The specific function, which is currently assigned to the graphical z-position pointer 234, may be displayed as a message next to the toolbar button 244b. For instance, if a mouse cursor is moved to the toolbar button 244b, a message may pop up next to the toolbar button 244b such as "Set Z Stack Begin" informing the user that a first limit of the z-stack can be defined at a position along the graphical focus range 232 by means of the z-position pointer 234. Accordingly, the user moves the z-position pointer 234 along the graphical focus range element 232 to a desired z-position and confirm this z-position as the first limit of the z-stack by clicking onto the toolbar button 244b. Then, the user moves the z-position pointer 234 along the focus range element 232 to another z-position and confirms this z-position as the second limit of the z-stack by clicking onto the toolbar button 244b. Again, the function which is currently assigned to the z-position pointer 234, may be displayed as a message such as "Set Z Stack End" popping up when the mouse cursor is moved to the toolbar button 244b. Once the first and second limits are determined, the sub-range along the graphical focus range 232 between these limits represents the z-stack.

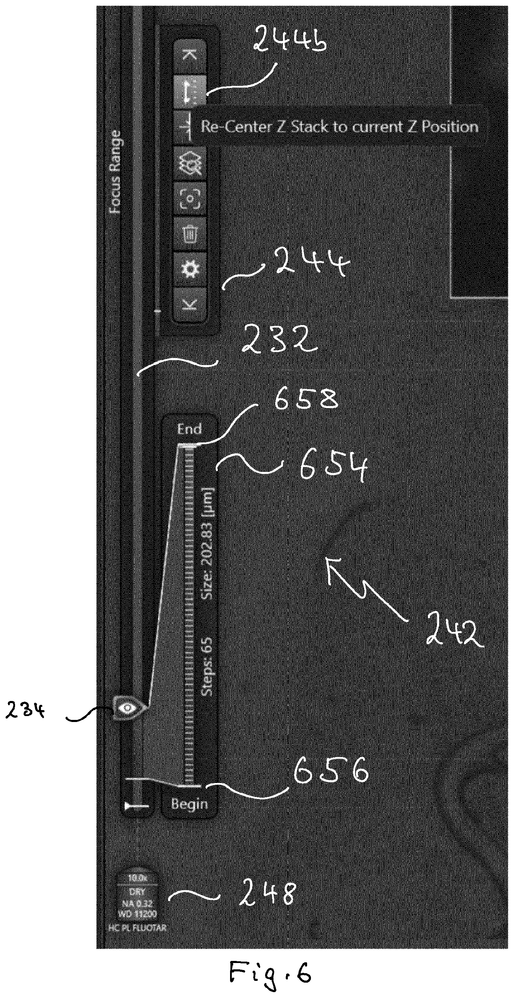

The image stack interface 242 may further comprise a graphical stack indication element 654 indicating the z-range of the image stack which is defined by means of the z-position pointer 234 interacting with the toolbar button 244b as explained above. An exemplary configuration of the graphical stack indication element 654 is illustrated in Figure 6.

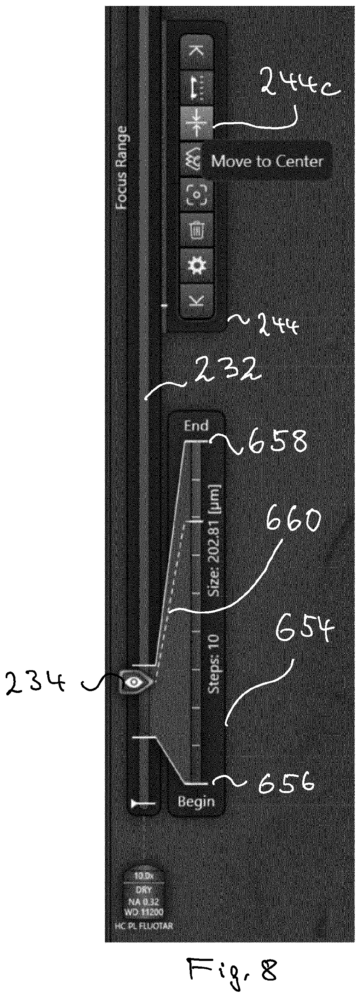

According to the example shown in Figure 6, the stack indication element 654 may be configured to pop up once the z-range of the image stack has been defined. The stack indication element 654 may include a bar which is displayed in parallel to the focus range element 232. The stack indication element 654 is defined by two z-stack limits 656, 658 ("Begin" and "End" in Figure 6) which correspond to the first and second limits, respectively, which have been defined before. The image stack interface 242 comprises a graphical z-position pointer indication element 660 (see Figure 8) which indicates a z-position in which the z-position pointer 234 is positioned along the graphical stack indication element 654. Furthermore, a scale with small horizontal lines may be displayed along the graphical stack indication element 654 representing a plurality of frame steps that correspond to the plurality of images which are to be captured in the image stack.

Preferably, the stack indication element 654 has a fixed size regardless of the size of the image stack. Thus, the image stack is clearly visible to the user even if its size is small in relation to the available focus range indicated by the graphical focus range element 232. On the other hand, if the relative size of the image stack matters, the stack indication element 654 may also be displayed with a size which indicates the stack size in relation to the available focus range.

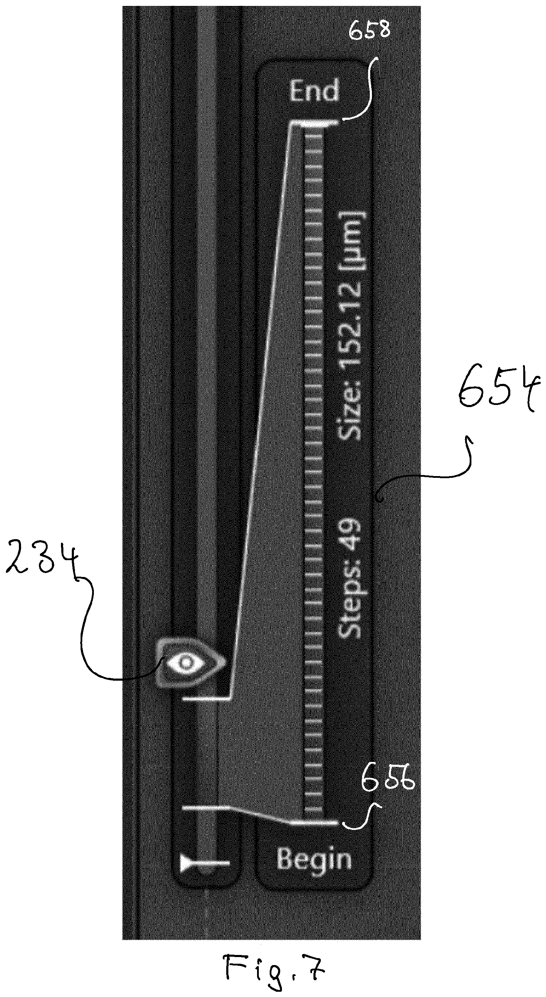

Figure 7 illustrates a situation in which the z-position pointer 234 is moved to a z-position which is outside the z-stack. In this example, the z-position pointer 234 is located at a position above the upper z-stack limit 658 of the graphical stack indication element 654. In order to move the z-position pointer 234 conveniently to a position that corresponds to the upper z-stack limit 658, the user pushes the toolbar button 244a. A message such as "Go to upper Z-Stack limit" displayed next to the toolbar button 244a may indicate the function of the toolbar button 244a. In response to an activation of the toolbar button 244a, the processor 114 controls the microscope focusing device 112 to move the objective 104 along the optical axis O to a z-position that corresponds to the upper z-stack limit 658 of the graphical stack indication element 654. In the same manner, the user may push the toolbar button 244h to move the z-position pointer 234 to the lower z-stack limit 656 of the stack indication element 654 and to cause a corresponding axial movement the objective 104 by means of the microscope focusing device 112.

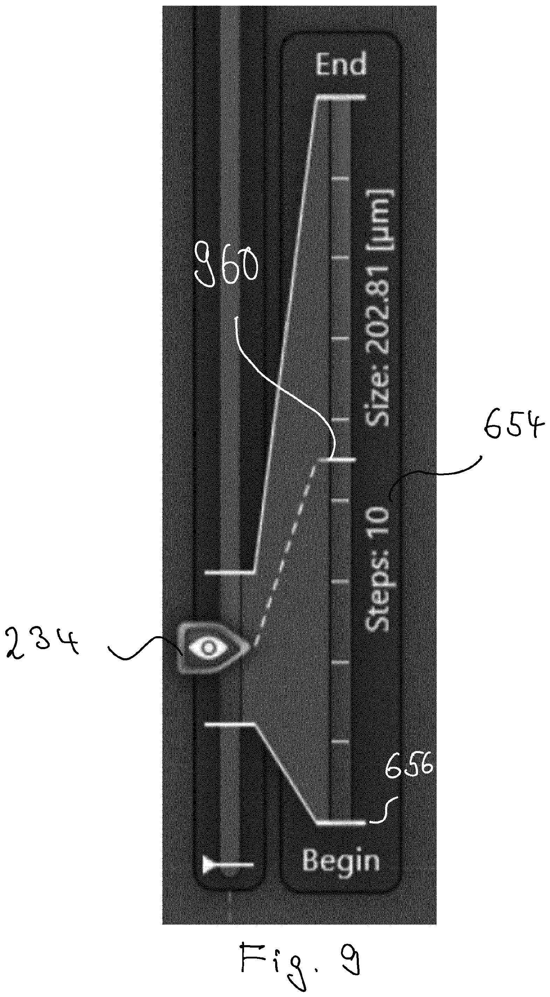

Figure 8 illustrates an operation which can be performed by the user to move the z-position pointer 234 to a center of the image stack which has been set before and is displayed by the graphical stack indication element 654. To this end, the user operates the toolbar button 244c next to which a message "Move to Center" is displayed. As a result, the z-position pointer 234 is shifted to a center position 960 along the stack indication element 654 as shown in Figure 9. Thus, in response to an activation of the toolbar button 244c, the processor 114 controls the microscope focusing device 112 to move the objective 104 along the optical axis O to a z-position that corresponds to the center position 960 of the graphical stack indication element 654.

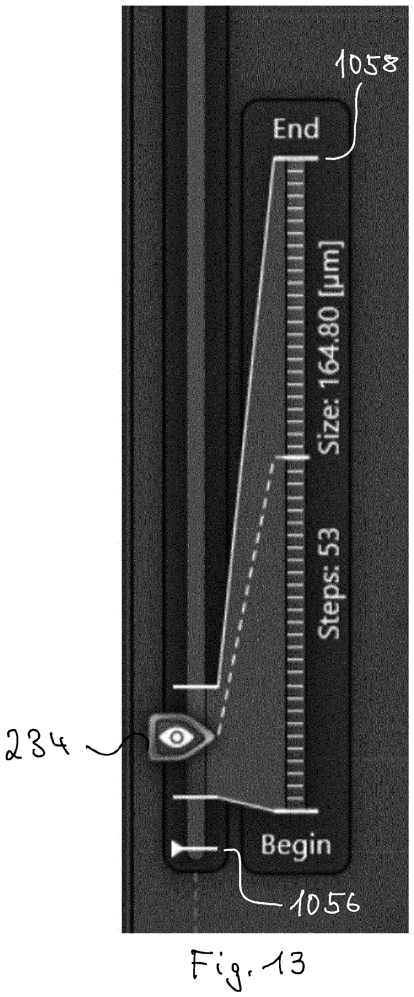

Referring again to Figure 6, there is another function which is selectively assigned to the graphical z-position pointer 234 in combination with the toolbar button 244b. This function is indicated by a message "Re-Center Z Stack to current Z Position" popping up next to the toolbar button 244b. Thus, in addition to determining the z-limits of the image stack as explained above, the graphical z-position pointer 234 may also be used in combination with the multi-function button 244b for conveniently re-centering the image stack to a current z-position along the focus range element 232. In order to perform a re-centering operation, the user moves the z-position pointer 234 to a desired z-position and confirms this z-position as a new center of the z-stack by clicking onto the toolbar button 244b. As a result, the image stack is updated such that new z-stack limits 1056, 1058 are defined which are equidistant to the current z-position representing the new center (see e.g. Figure 13). The new z-stack limits 1056, 1058 may be automatically defined such that the size of the re-centered image stack remains unchanged. This allows to conveniently shift the image stack as whole without the user having to take action to reset the z-stack limits.

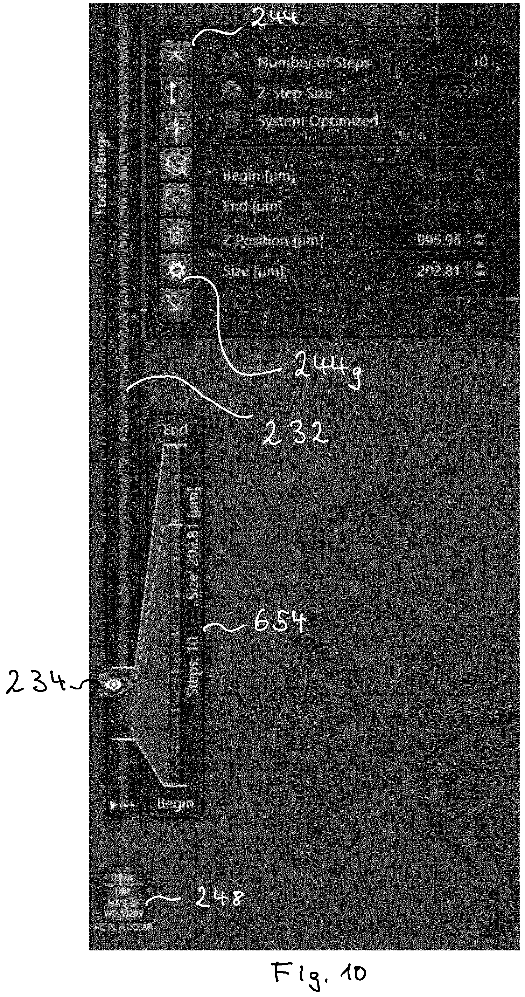

Although automatically updating the z-stack limits may be preferred, it is to be noted that the toolbar 244 also allows a manual setting of the image stack, in particular to update the same. To this end, the user may operate the toolbar button 244g so that a list of setting options is presented to the user as shown in Figure 10. These setting options comprise inter alia the limits of the z-stack ("Begin" and "End") as well es the size of the z-stack ("Size").

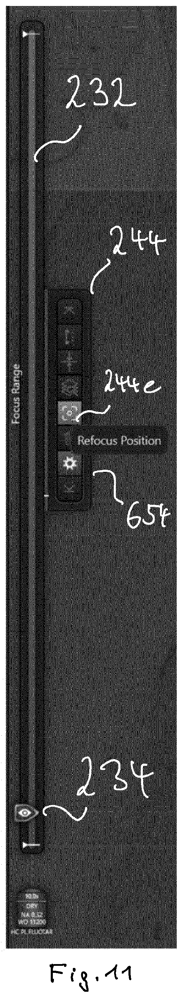

The image stack interface 242 may allow to activate an autofocus (AF) function. In the present embodiment, the AF operation is started by actuating the toolbar button 244e as shown in Figure 11. The processor 114 controls the microscope focusing device 112 to perform the AF operation in order to find a plane of the sample 106 onto which the objective 104 is currently focused. The AF function is indicated by a message "Refocus Position" displayed next to the toolbar button 244e.

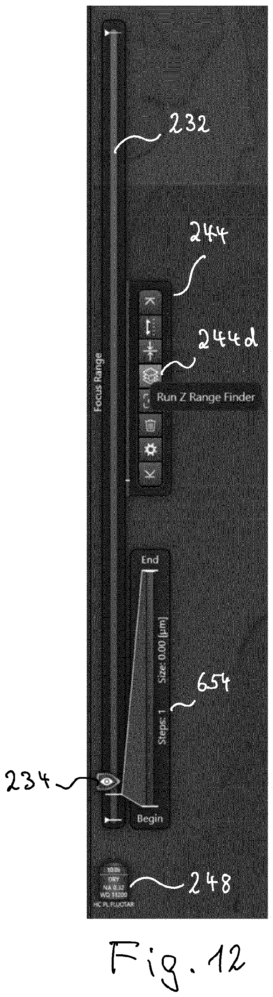

Furthermore, the toolbar 244 allows to perform an operation for automatically identifying a suitable z-stack. In order to start this operation, the toolbar button 244d is actuated as indicated by a message "Run Z Range Finder" as shown in Figure 12. In response to an actuation of the toolbar button 244d, the processor 114 determines a suitable setting for the z-stack. An example of such a stack identification process is shown in Figure 13. In particular, it can be seen from Figure 13 that the z-position pointer 234 is centered in the z-stack with the z-stack limits equidistant from the z-position pointer 234.

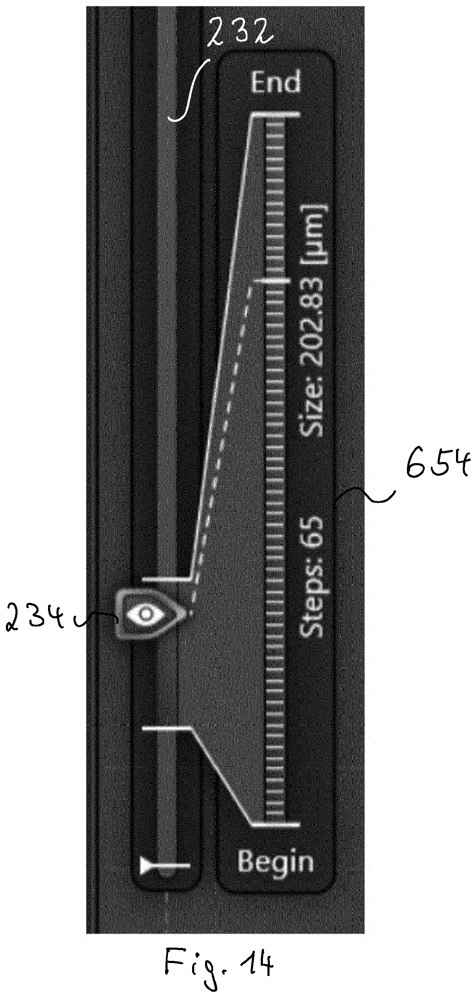

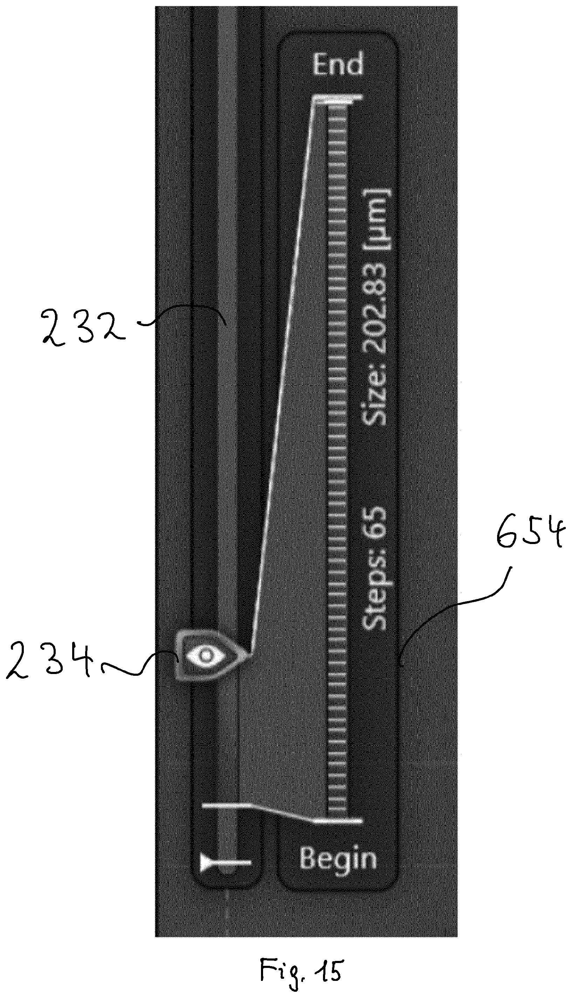

The graphical z-position pointer 234 may also be configured to be operated by the user in order to set a z-position for updating a limit of the image stack which is closer to this z-position. According to the example shown in Figure 14, the z-position pointer 234 is moved to a z-position within the z-stack which is closer to the upper z-stack limit. Subsequently, the z-position pointer 234 can be operated, for example through a mouse click. As result, the upper z-stack limit is shifted to the current position of the z-position pointer 234, and the display of the graphical stack indication member 654 is updated as illustrated in Figure 15. Accordingly, a one-click definition of the z-stack limit can be achieved. In particular, a thickness of the z-stack can be reduced depending on the particular sample 106 to be imaged. In case that the number of steps or frames within the updated (thinner) z-stack is too large, the number can be reduced by adapting the corresponding setting (see "Number of Steps" in Figure 10).

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

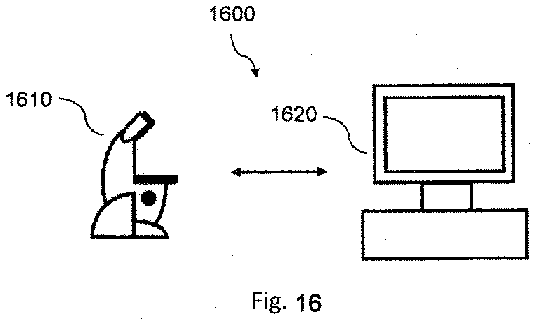

Some embodiments relate to a microscope comprising a system as described in connection with one or more of the Figs. 1 to 15. Alternatively, a microscope may be part of or connected to a system as described in connection with one or more of the Figs. 1 to 15. Fig. 16 shows a schematic illustration of a system 1600 configured to perform a method described herein. The system 1600 comprises a microscope 1610 and a computer system 1620. The microscope 1610 is configured to take images and is connected to the computer system 1620. The computer system 1620 is configured to execute at least a part of a method described herein. The computer system 1620 may be configured to execute a machine learning algorithm. The computer system 1620 and microscope 1610 may be separate entities but can also be integrated together in one common housing. The computer system 1620 may be part of a central processing system of the microscope 1610 and/or the computer system 1620 may be part of a subcomponent of the microscope 1610, such as a sensor, an actor, a camera or an illumination unit, etc. of the microscope 1610.

The computer system 1620 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 1620 may comprise any circuit or combination of circuits. In one embodiment, the computer system 1620 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 1620 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 1620 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 1620 may also include a display device, one or more speakers, and a keyboard and/or controller, which can include a mouse, trackball, touch screen, voice-recognition device, or any other device that permits a system user to input information into and receive information from the computer system 1620.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of Reference Signs

- 100: microscope
- 102: microscope control arrangement
- 104: objective
- 106: sample
- 108: sample carrier
- 110: coverslip
- 112: microscope focusing device 112
- 113: specimen
- 114: processor
- 116: display device
- 118: graphical user interface
- 120: screen
- 222: image display area
- 224: live image
- 226: ROI area
- 228: ROI image
- 230: focus control interface
- 232: graphical focus range element
- 234: graphical z-position pointer
- 236: first graphical focus range limit
- 238: second graphical focus range limit
- 240: live image on/off button
- 242: image stack interface
- 244: toolbar
- 244a-244h: toolbar buttons
- 246: stack control on/off button
- 246: graphical objective icon
- 340: lower surface
- 448: graphical arrow icon
- 450: live image display icon
- 552: graphical out-of-range alert element
- 654: graphical stack indication element
- 656, 658: z-stack limits
- 660: graphical z-position pointer indication elemen
- 960: center position
- 1056, 1058: updated z-stack limits

## Claims

1. A microscope control arrangement (102) for operating a microscope focusing device (112) which is adapted to adjust a relative focus position of an objective (104) in relation to a sample (106) along an optical axis (O) of the objective (104), comprising:
a display device (116) configured to display a graphical user interface (118) which is adapted to receive a user input, and
at least one processor (114) configured to control the microscope focusing device (112) and the display device (116) for updating the graphical user interface (118) in response to the user input,
wherein the processor (114) is further configured to cause the graphical user interface (118) to display a focus control interface (230) which comprises a graphical focus range element (232) indicating a predetermined focus range and a graphical z-position pointer (234) indicating a current z-position within the predetermined focus range, and
wherein the graphical z-position pointer (234) is movable along the graphical focus range element (232) in response to the user input to adjust the relative focus position to the current z-position indicated by the graphical z-position pointer (234),
**characterized in that**
the processor (114) is configured to obtain a first limiting value by means of a focus control device which is integrated in the microscope and a second limiting value depending on a free working distance (FWD) of the objective (104) for setting the relative focus position, and the processor (114) is further configured to cause the graphical user interface (118) to display the graphical focus range element (232) between first and second graphical focus range limits (236, 238) assigned with the first and second limiting values, respectively.

2. The microscope control arrangement (102) according to claim 1, comprising an input device configured to receive the user input for controlling the graphical user interface (118).

3. The microscope control arrangement (102) according to any one of the preceding claims, wherein the graphical focus range element (232) comprises a bar along which the graphical z-position pointer (234) is movable by the user input.

4. The microscope control arrangement (102) according to any one of the preceding claims, wherein the processor (114) is configured to cause the focus control interface (230) to display at least one graphical arrow icon (448) indicating a moving direction in which the graphical z-position pointer (234) is moved along the graphical focus range element (232) by the user input.

5. The microscope control arrangement (102) according to any one of the preceding claims, wherein the processor (114) is configured to cause the focus control interface (230) to display at least one graphical out-of-range alert element (552) indicating that the relative focus position adjusted by the user input exceeds the predetermined focus range.

6. The microscope control arrangement (102) according to claim 5, wherein the graphical out-of-range alert element (552) is configured to indicate an amount by which the relative focus position adjusted by the user input exceeds the predetermined focus range.

7. The microscope control arrangement (102) according to any one of the preceding claims, wherein the graphical user interface (118) comprises a live image on/off button (240) configured to be operated by user input to turn a live image display on or off, and the graphical z-position pointer (234) comprises a live image display icon (450) configured to indicate whether the live image display is turned on or off.

8. The microscope control arrangement (102) according to any one of the preceding claims, wherein the focus control interface (230) includes an image stack interface (242) comprising a graphical stack defining element and a graphical stack indication element (654),
wherein the graphical stack defining element is configured to be operated by user input to define a range of an image stack which is to be generated along the optical axis (O) within the predetermined focus range displayed by the graphical focus range element (232), and
wherein the graphical stack indication element (654) is configured to indicate the range of the image stack defined by means of the graphical stack defining element.

9. The microscope control arrangement (102) according to claim 8, wherein the graphical user interface (118) comprises a stack control on/off button (246) configured to be operated by user input to turn the display of the image stack interface (242) on and off.

10. The microscope control arrangement (102) according to claim 8 or 9, wherein the graphical stack indication element (654) has a fixed size regardless of the size of the image stack.

11. The microscope control arrangement (102) according to any one of the claims 8 to 10, wherein the graphical stack indication element (654) has a size which indicates the size of the image stack in relation to the size of the predetermined focus range.

12. The microscope control arrangement (102) according to any one of the claims 8 to 11, wherein the graphical stack defining element is integrated with the graphical z-position pointer (234).

13. The microscope control arrangement (102) according to any one of the claims 8 to 12, wherein the image stack interface (242) comprises a graphical z-position pointer indication element (660) configured to indicate where the graphical z-position pointer (234) is positioned along the graphical stack indication element (654).

14. The microscope control arrangement (102) according to any one of the claims 8 to 13, wherein the graphical stack defining element is configured to be operated by the user input to set a position for updating a limit of the image stack which is closer to said position.

15. The microscope control arrangement (102) according to any one of the claims 8 to 14, wherein the graphical stack defining element is additionally configured to be operated by user input to define a position along the graphical stack indication element (654) for re-centering the image stack at said position.

16. The microscope control arrangement (102) according to any one of the claims 8 or 15, wherein the graphical user interface (118) comprises a graphical multi-function button (244b) configured to be operated by user input to select an activation of one the following functions assigned to the graphical stack defining element:
the graphical stack defining element defines a first limit of the image stack in response to the user input,
the graphical stack defining element defines a second limit of the image stack in response to the user input, and
the graphical stack defining element re-centers the image stack relative to the current z-position in response to the user input.

17. The microscope control arrangement (102) according to any one of the claims 8 to 16, wherein the image stack interface (242) comprises a graphical button (244d) configured to be operated by user input to define the image stack automatically.

18. A method of operating a microscope focusing device (112) which is adapted to adjust a relative focus position of an objective (104) in relation to a sample (106) along an optical axis (O) of the objective (104) by means of the microscope control arrangement (102) according to one of the preceding claims, comprising the following steps:
displaying a graphical user interface (118) which is adapted to receive a user input, and
controlling the microscope focusing device (112) and the display device (102) for updating the graphical user interface (118) in response to the user input,
wherein the graphical user interface (118) is caused to display a focus control interface (230) which comprises a graphical focus range element (232) indicating a predetermined focus range and a graphical z-position pointer (234) indicating a current z-position within the predetermined focus range, and wherein the graphical z-position pointer (234) is moved along the graphical focus range element (232) in response to the user input to adjust the relative focus position to the current z-position indicated by the graphical z-position pointer (234),
wherein the method further comprises obtaining a first limiting value by means of a focus control device which is integrated in the microscope and a second limiting value depending on a free working distance (FWD) of the objective (104) for setting the relative focus position, and
causing the graphical user interface (118) to display the graphical focus range element (232) between first and second graphical focus range limits (236, 238) assigned with the first and second limiting values, respectively.

## Patentansprüche

1. Mikroskopsteuerungsanordnung (102) zum Betreiben einer Mikroskopfokussiervorrichtung (112), die dafür eingerichtet ist, eine relative Fokusposition eines Objektivs (104) in Bezug auf eine Probe (106) entlang einer optischen Achse (O) des Objektivs (104) einzustellen, umfassend:
eine Anzeigevorrichtung (116), die konfiguriert ist, eine grafische Benutzeroberfläche (118) anzuzeigen, die dafür eingerichtet ist, eine Benutzereingabe zu empfangen, und
mindestens einen Prozessor (114), der konfiguriert ist, die Mikroskopfokussiervorrichtung (112) und die Anzeigevorrichtung (116) zu steuern, um die grafische Benutzeroberfläche (118) als Reaktion auf die Benutzereingabe zu aktualisieren,
wobei der Prozessor (114) ferner konfiguriert ist, die grafische Benutzeroberfläche (118) zu veranlassen, eine Fokussteuerschnittstelle (230) anzuzeigen, die ein grafisches Fokusbereichselement (232) umfasst, das einen vorgegebenen Fokusbereich anzeigt, und einen grafischen z-Positionszeiger (234), der eine aktuelle z-Position innerhalb des vorgegebenen Fokusbereichs anzeigt, und
wobei der grafische z-Positionszeiger (234) entlang des grafischen Fokusbereichselements (232) als Reaktion auf die Benutzereingabe bewegbar ist, um die relative Fokusposition auf die aktuelle z-Position einzustellen, die durch den grafischen z-Positionszeiger (234) angezeigt wird,
**dadurch gekennzeichnet, dass** der Prozessor (114) konfiguriert ist, einen ersten Grenzwert mittels einer Fokussteuervorrichtung, die in das Mikroskop integriert ist, und einen zweiten Grenzwert in Abhängigkeit von einem freien Arbeitsabstand (FWD) des Objektivs (104) zum Einstellen der relativen Fokusposition zu erhalten, und der Prozessor (114) ferner konfiguriert ist, die grafische Benutzeroberfläche (118) zu veranlassen, das grafische Fokusbereichselement (232) zwischen ersten und zweiten grafischen Fokusbereichsgrenzen (236, 238) anzuzeigen, die dem ersten bzw. dem zweiten Grenzwert zugeordnet sind.

2. Mikroskopsteuerungsanordnung (102) nach Anspruch 1, eine Eingabevorrichtung umfassend, die konfiguriert ist, die Benutzereingabe zum Steuern der grafischen Benutzeroberfläche (118) zu empfangen.

3. Mikroskopsteuerungsanordnung (102) nach einem der vorstehenden Ansprüche, wobei das grafische Fokusbereichselement (232) einen Balken umfasst, entlang dessen der grafische z-Positionszeiger (234) durch die Benutzereingabe bewegbar ist.

4. Mikroskopsteuerungsanordnung (102) nach einem der vorstehenden Ansprüche, wobei der Prozessor (114) konfiguriert ist, die Fokussteuerschnittstelle (230) zu veranlassen, mindestens ein grafisches Pfeilsymbol (448) anzuzeigen, das eine Bewegungsrichtung anzeigt, in der der grafische z-Positionszeiger (234) entlang des grafischen Fokusbereichselements (232) durch die Benutzereingabe bewegt wird.

5. Mikroskopsteuerungsanordnung (102) nach einem der vorstehenden Ansprüche, wobei der Prozessor (114) konfiguriert ist, die Fokussteuerschnittstelle (230) zu veranlassen, mindestens ein grafisches Außerbereichs-Warnelement (552) anzuzeigen, das anzeigt, dass die durch die Benutzereingabe eingestellte relative Fokusposition den vorgegebenen Fokusbereich überschreitet.

6. Mikroskopsteuerungsanordnung (102) nach Anspruch 5, wobei das grafische Außerbereichs-Warnelement (552) konfiguriert ist, einen Betrag anzuzeigen, um den die durch die Benutzereingabe eingestellte relative Fokusposition den vorgegebenen Fokusbereich überschreitet.

7. Mikroskopsteuerungsanordnung (102) nach einem der vorstehenden Ansprüche, wobei die grafische Benutzeroberfläche (118) eine Live-Bild-Ein- /Aus-Schaltfläche (240) umfasst, die konfiguriert ist, durch Benutzereingabe betätigt zu werden, um eine Live-Bild-Anzeige ein- oder auszuschalten, und der grafische z-Positionszeiger (234) ein Live-Bild-Anzeigesymbol (450) umfasst, das konfiguriert ist anzuzeigen, ob die Live-Bild-Anzeige ein- oder ausgeschaltet ist.

8. Mikroskopsteuerungsanordnung (102) nach einem der vorstehenden Ansprüche, wobei die Fokussteuerschnittstelle (230) eine Bildstapel-Schnittstelle (242) einschließt, die ein grafisches Stapeldefinitionselement und ein grafisches Stapelanzeigeelement (654) umfasst,
wobei das grafische Stapeldefinitionselement konfiguriert ist, durch Benutzereingabe betätigt zu werden, um einen Bereich eines Bildstapels zu definieren, der entlang der optischen Achse (O) innerhalb des durch das grafische Fokusbereichselement (232) angezeigten vorgegebenen Fokusbereichs erzeugt werden soll, und
wobei das grafische Stapelanzeigeelement (654) konfiguriert ist, den Bereich des Bildstapels anzuzeigen, der mittels des grafischen Stapeldefinitionselements definiert ist.

9. Mikroskopsteuerungsanordnung (102) nach Anspruch 8, wobei die grafische Benutzeroberfläche (118) eine Stapelsteuerungs-Ein/Aus-Schaltfläche (246) umfasst, die konfiguriert ist, durch Benutzereingabe betätigt zu werden, um die Anzeige der Bildstapel-Schnittstelle (242) ein- und auszuschalten.

10. Mikroskopsteuerungsanordnung (102) nach Anspruch 8 oder 9, wobei das grafische Stapelanzeigeelement (654) unabhängig von der Größe des Bildstapels eine feste Größe aufweist.

11. Mikroskopsteuerungsanordnung (102) nach einem der Ansprüche 8 bis 10, wobei das grafische Stapelanzeigeelement (654) eine Größe aufweist, die die Größe des Bildstapels in Relation zu der Größe des vorgegebenen Fokusbereichs anzeigt.

12. Mikroskopsteuerungsanordnung (102) nach einem der Ansprüche 8 bis 11, wobei das grafische Stapeldefinitionselement mit dem grafischen z-Positionszeiger (234) integriert ist.

13. Mikroskopsteuerungsanordnung (102) nach einem der Ansprüche 8 bis 12, wobei die Bildstapel-Schnittstelle (242) ein grafisches z-Positionszeiger-Anzeigeelement (660) umfasst, das konfiguriert ist, anzuzeigen, wo der grafische z-Positionszeiger (234) entlang des grafischen Stapelanzeigeelements (654) positioniert ist.

14. Mikroskopsteuerungsanordnung (102) nach einem der Ansprüche 8 bis 13, wobei das grafische Stapeldefinitionselement konfiguriert ist, durch die Benutzereingabe betätigt zu werden, um eine Position zum Aktualisieren einer Grenze des Bildstapels zu setzen, die näher an der betreffenden Position liegt.

15. Mikroskopsteuerungsanordnung (102) nach einem der Ansprüche 8 bis 14, wobei das grafische Stapeldefinitionselement zusätzlich konfiguriert ist, durch Benutzereingabe betätigt zu werden, um eine Position entlang des grafischen Stapelanzeigeelements (654) zum Rezentrieren des Bildstapels an der betreffenden Position zu definieren.

16. Mikroskopsteuerungsanordnung (102) nach einem der Ansprüche 8 oder 15, wobei die grafische Benutzeroberfläche (118) eine grafische Multifunktionsschaltfläche (244b) umfasst, die konfiguriert ist, durch Benutzereingabe betätigt zu werden, um eine Aktivierung einer der folgenden dem grafischen Stapeldefinitionselement zugewiesenen Funktionen auszuwählen:
das grafische Stapeldefinitionselement definiert eine erste Grenze des Bildstapels als Reaktion auf die Benutzereingabe,
das grafische Stapeldefinitionselement definiert eine zweite Grenze des Bildstapels als Reaktion auf die Benutzereingabe, und
das grafische Stapeldefinitionselement rezentriert den Bildstapel relativ zu der aktuellen z-Position als Reaktion auf die Benutzereingabe.

17. Mikroskopsteuerungsanordnung (102) nach einem der Ansprüche 8 bis 16, wobei die Bildstapel-Schnittstelle (242) eine grafische Schaltfläche (244d) umfasst, die konfiguriert ist, durch Benutzereingabe betätigt zu werden, um den Bildstapel automatisch zu definieren.

18. Verfahren zum Betreiben einer Mikroskopfokussiervorrichtung (112), die dafür eingerichtet ist, eine relative Fokusposition eines Objektivs (104) in Bezug auf eine Probe (106) entlang einer optischen Achse (O) des Objektivs (104) mittels der Mikroskopsteuerungsanordnung (102) nach einem der vorstehenden Ansprüche einzustellen, umfassend die folgenden Schritte:
Anzeigen einer grafischen Benutzeroberfläche (118), die dafür eingerichtet ist, eine Benutzereingabe zu empfangen, und
Steuern der Mikroskopfokussiervorrichtung (112) und der Anzeigevorrichtung (102) zum Aktualisieren der grafischen Benutzeroberfläche (118) als Reaktion auf die Benutzereingabe, wobei die grafische Benutzeroberfläche (118) veranlasst wird, eine Fokussteuerschnittstelle (230) anzuzeigen, die ein grafisches Fokusbereichselement (232) umfasst, das einen vorgegebenen Fokusbereich anzeigt, und einen grafischen z-Positionszeiger (234), der eine aktuelle z-Position innerhalb des vorgegebenen Fokusbereichs anzeigt, und
wobei der grafische z-Positionszeiger (234) entlang des grafischen Fokusbereichselements (232) als Reaktion auf die Benutzereingabe bewegt wird, um die relative Fokusposition auf die aktuelle z-Position einzustellen, die durch den grafischen z-Positionszeiger (234) angezeigt wird,
wobei das Verfahren ferner das Erhalten eines ersten Grenzwerts mittels einer Fokussteuervorrichtung, die in das Mikroskop integriert ist, und eines zweiten Grenzwerts in Abhängigkeit von einem freien Arbeitsabstand (FWD) des Objektivs (104) zum Einstellen der relativen Fokusposition umfasst, und
Veranlassen der grafischen Benutzeroberfläche (118), das grafische Fokusbereichselement (232) zwischen ersten und zweiten grafischen Fokusbereichsgrenzen (236, 238) anzuzeigen, die dem ersten bzw. dem zweiten Grenzwert zugeordnet sind.

## Revendications

1. Agencement de commande de microscope (102) destiné à faire fonctionner un dispositif de mise au point du microscope (112) qui est adapté à ajuster une position relative de mise au point d'un objectif (104) par rapport à un échantillon (106) le long d'un axe optique (O) de l'objectif (104), comprenant :
un dispositif d'affichage (116) configuré pour afficher une interface utilisateur graphique (118) qui est adaptée à recevoir une entrée utilisateur, et
au moins un processeur (114) configuré pour commander le dispositif de mise au point du microscope (112) et le dispositif d'affichage (116) pour mettre à jour l'interface utilisateur graphique (118) en réponse à l'entrée utilisateur,
dans lequel le processeur (114) est en outre configuré pour amener l'interface utilisateur graphique (118) à afficher une interface de commande de mise au point (230) qui comprend un élément graphique de plage de mise au point (232) indiquant une plage de mise au point prédéterminée et un pointeur graphique de position z (234) indiquant une position z actuelle dans la plage de mise au point prédéterminée, et
dans lequel le pointeur graphique de position z (234) est mobile le long de l'élément graphique de plage de mise au point (232) en réponse à l'entrée utilisateur afin d'ajuster la position relative de mise au point à la position z actuelle indiquée par le pointeur graphique de position z (234),
**caractérisé en ce que** le processeur (114) est configuré pour obtenir une première valeur limite au moyen d'un dispositif de commande de mise au point qui est intégré dans le microscope et une seconde valeur limite en fonction d'une distance de travail libre (FWD) de l'objectif (104) pour régler la position relative de mise au point, et le processeur (114) est en outre configuré pour amener l'interface utilisateur graphique (118) à afficher l'élément graphique de plage de mise au point (232) entre une première et une seconde limites graphiques de la plage de mise au point (236, 238), associées à la première valeur limite et à la seconde valeur limite, respectivement.

2. Agencement de commande de microscope (102) selon la revendication 1, comprenant un dispositif d'entrée configuré pour recevoir l'entrée utilisateur pour commander l'interface utilisateur graphique (118).

3. Agencement de commande de microscope (102) selon l'une quelconque des revendications précédentes, dans lequel l'élément graphique de plage de mise au point (232) comprend une barre le long de laquelle le pointeur graphique de position z (234) est mobile par l'entrée utilisateur.

4. Agencement de commande de microscope (102) selon l'une quelconque des revendications précédentes, dans lequel le processeur (114) est configuré pour amener l'interface de commande de mise au point (230) à afficher au moins une icône graphique en forme de flèche (448) indiquant une direction de déplacement dans laquelle le pointeur graphique de position z (234) est déplacé le long de l'élément graphique de plage de mise au point (232) par l'entrée utilisateur.

5. Agencement de commande de microscope (102) selon l'une quelconque des revendications précédentes, dans lequel le processeur (114) est configuré pour amener l'interface de commande de mise au point (230) à afficher au moins un élément graphique d'alerte hors plage (552) indiquant que la position relative de mise au point ajustée par l'entrée utilisateur dépasse la plage de mise au point prédéterminée.

6. Agencement de commande de microscope (102) selon la revendication 5, dans lequel l'élément graphique d'alerte hors plage (552) est configuré pour indiquer de combien la position relative de mise au point ajustée par l'entrée utilisateur dépasse la plage de mise au point prédéterminée.

7. Agencement de commande de microscope (102) selon l'une quelconque des revendications précédentes, dans lequel l'interface utilisateur graphique (118) comprend un bouton marche/arrêt de l'image en direct (240) configuré pour être actionné par entrée utilisateur afin d'activer ou de désactiver un affichage de l'image en direct, et le pointeur graphique de position z (234) comprend une icône d'affichage de l'image en direct (450) configurée pour indiquer si l'affichage de l'image en direct est activé ou désactivé.

8. Agencement de commande de microscope (102) selon l'une quelconque des revendications précédentes, dans lequel l'interface de commande de mise au point (230) inclut une interface de pile d'images (242) comprenant un élément graphique de définition de pile d'images et un élément graphique d'indication de pile d'images (654),
dans lequel l'élément graphique de définition de pile d'images est configuré pour être actionné par une entrée utilisateur afin de définir une plage d'une pile d'images qui doit être générée le long de l'axe optique (O) dans la plage de mise au point prédéterminée affichée par l'élément graphique de plage de mise au point (232), et
dans lequel l'élément graphique d'indication de pile d'images (654) est configuré pour indiquer la plage de la pile d'images définie au moyen de l'élément graphique de définition de pile d'images.

9. Agencement de commande de microscope (102) selon la revendication 8, dans lequel l'interface utilisateur graphique (118) comprend un bouton marche/arrêt de commande de pile d'images (246) configuré pour être actionné par une entrée utilisateur afin d'activer et de désactiver l'affichage de l'interface de pile d'images (242).

10. Agencement de commande de microscope (102) selon la revendication 8 ou la revendication 9, dans lequel l'élément graphique d'indication de pile d'images (654) présente une taille fixe indépendamment de la taille de la pile d'images.

11. Agencement de commande de microscope (102) selon l'une quelconque des revendications 8 à 10, dans lequel l'élément graphique d'indication de pile d'images (654) présente une taille qui indique la taille de la pile d'images par rapport à la taille de la plage de mise au point prédéterminée.

12. Agencement de commande de microscope (102) selon l'une quelconque des revendications 8 à 11, dans lequel l'élément graphique de définition de pile d'images est intégré au pointeur graphique de position z (234).

13. Agencement de commande de microscope (102) selon l'une quelconque des revendications 8 à 12, dans lequel l'interface de pile d'images (242) comprend un élément graphique d'indication du pointeur de position z (660) configuré pour indiquer où le pointeur graphique de position z (234) est positionné le long de l'élément graphique d'indication de pile d'images (654).

14. Agencement de commande de microscope (102) selon l'une quelconque des revendications 8 à 13, dans lequel l'élément graphique de définition de pile d'images est configuré pour être actionné par l'entrée utilisateur afin de définir une position pour mettre à jour une limite de la pile d'images qui est plus proche de ladite position.

15. Agencement de commande de microscope (102) selon l'une quelconque des revendications 8 à 14, dans lequel l'élément graphique de définition de pile d'images est en outre configuré pour être actionné par entrée utilisateur afin de définir une position le long de l'élément graphique d'indication de pile d'images (654) pour recentrer la pile d'images à ladite position.

16. Agencement de commande de microscope (102) selon l'une quelconque des revendications 8 ou 15, dans lequel l'interface utilisateur graphique (118) comprend un bouton graphique multifonction (244b) configuré pour être actionné par une entrée utilisateur afin de sélectionner une activation de l'une des fonctions suivantes associées à l'élément graphique de définition de pile d'images :
l'élément graphique de définition de pile d'images définit une première limite de la pile d'images en réponse à l'entrée utilisateur,
l'élément graphique de définition de pile d'images définit une seconde limite de la pile d'images en réponse à l'entrée utilisateur, et
l'élément graphique de définition de pile d'images recentre la pile d'images par rapport à la position z actuelle en réponse à l'entrée utilisateur.

17. Agencement de commande de microscope (102) selon l'une quelconque des revendications 8 à 16, dans lequel l'interface de pile d'images (242) comprend un bouton graphique (244d) configuré pour être actionné par une entrée utilisateur afin de définir automatiquement la pile d'images.

18. Procédé de fonctionnement d'un dispositif de mise au point du microscope (112) qui est adapté à ajuster une position relative de mise au point d'un objectif (104) par rapport à un échantillon (106) le long d'un axe optique (O) de l'objectif (104) au moyen de l'agencement de commande de microscope (102) selon l'une des revendications précédentes, comprenant les étapes suivantes :
affichage d'une interface utilisateur graphique (118) qui est adaptée à recevoir une entrée utilisateur, et
commande du dispositif de mise au point du microscope (112) et du dispositif d'affichage (102) pour mettre à jour l'interface utilisateur graphique (118) en réponse à l'entrée utilisateur, dans lequel l'interface utilisateur graphique (118) est amenée à afficher une interface de commande de mise au point (230) qui comprend un élément graphique de plage de mise au point (232) indiquant une plage de mise au point prédéterminée et un pointeur graphique de position z (234) indiquant une position z actuelle dans la plage de mise au point prédéterminée, et
dans lequel le pointeur graphique de position z (234) est déplacé le long de l'élément graphique de plage de mise au point (232) en réponse à l'entrée utilisateur afin d'ajuster la position relative de mise au point à la position z actuelle indiquée par le pointeur graphique de position z (234),
dans lequel le procédé comprend en outre l'obtention d'une première valeur limite au moyen d'un dispositif de commande de mise au point qui est intégré dans le microscope et d'une seconde valeur limite en fonction d'une distance de travail libre (FWD) de l'objectif (104) pour régler la position relative de mise au point, et
l'amenée de l'interface utilisateur graphique (118) à afficher l'élément graphique de plage de mise au point (232) entre une première et une seconde limites graphiques de la plage de mise au point (236, 238), associées à la première valeur limite et à la seconde valeur limite, respectivement.
